Europäisches Patentamt

European Patent Office

Office européen des brevets

(19)

(11) **EP 1 544 734 A1**

(12) **EUROPEAN PATENT APPLICATION**

(43) Date of publication:
**22.06.2005 Bulletin 2005/25**

(51) Int Cl.⁷: **G06F 9/46**

(21) Application number: **03028970.6**

(22) Date of filing: **17.12.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **SIEMENS AKTIENGESELLSCHAFT 80333 München (DE)**

(72) Inventors:
- **Schlagmann, Alfred 84533 Haiming (DE)**
- **Schlichte, Marc 81379 München (DE)**
- **Sessler, Jürgen 85586 Poing (DE)**

(54) **A method for performing a task on a mobile terminal, and a mobile terminal**

(57)    A method for performing a task on a mobile terminal (111), comprises the steps of:

- in response to detecting an event (400) relating to a task to be performed on the mobile terminal (111); selecting a task profile (402) for the task;
- searching for available stationary local input or output resources (161) external to the mobile terminal (111), and producing a set of stationary local input or output resources (161) available;

- receiving a resource profile (401) of an available stationary input or output resource (161) belonging to the set of available resources;
- matching the task profile (402) with the resource profile (401) thus producing a matching result; and
- if the matching result shows that the resource profile (401) correlates with the task profile (402), performing the task using the available stationary input or output resource (161).

# FIG 8A

Printed by Jouve, 75001 PARIS (FR)

EP 1 544 734 A1

## Description

## Field of the invention

The invention relates to performing a task on a mobile terminal, the task comprising input or output.

## Background of the invention

The success and expansion of mobile communications has been overwhelming in the past decade. Despite the fast development in capabilities of mobile terminals, some of the input or output capabilities has been sacrificed in order to obtain or maintain the mobility. These constraints are mainly due to the facts that a mobile terminal has to be relatively small to fit into pocket; and that a mobile terminal must not consume too much current in order to allow a long stand-by and operating time.

In the same time, the services available at a mobile terminal have become much better. The variety of new services include from receiving of and listening to audio files in steoreo, or playing streaming video picture, to different game applications. A mobile terminal may comprise a plurality of applications, such as a calendar, a photo album for digital pictures, notepad, and so forth. The display and keypad, if any, of a mobile terminal are nevertheless usually far from ideal for using such services, or for input purposes.

In other words, the physical constraints limit the usability of a mobile terminal. But because these constraints are of an essential nature and help to guarantee the mobility, the development engineer has ended up facing a paradox: how obtain good comfort and quality for input or output when performing a task in a mobile terminal.

## Summary of the invention

It is an object of the invention to bring out an improved method for performing a task on the mobile terminal. This object can be achieved by using a method as described in claim 1 or 2. There are corresponding device claims 7 and 8 for a mobile terminal.

Another object of the invention is to increase user comfort when performing a task on the mobile terminal. This object can be achieved by using a method as described in any one of the dependent claims 3 to 6. Device claims 9 to 12 define a mobile terminal for meeting the same object.

## Advantages of the invention

When available stationary local input or output resources external to the mobile terminal are searched in response to detecting an event relating to a task, thus producing a set of stationary local input or output resources available, and a resource profile of an available stationary input or output resource belonging to the set of available resources is received, the task profile can be matched with the resource profile. If the resource profile correlates with the task profile, the task can be performed using the available stationary input or output resource.

This brings the user many benefits. A stationary input resource can help the user to give user input in a much faster and comfortable way. A stationary output resource can improve the sound- or image quality signifigantly.

When the approach from above is further combined with comparing a task-dependent parameter describing incomfort readiness of the user with an incomfort reference parameter for said stationary input or output resource, user comfort can be improved by not selecting a particular stationary input or output resource external to said mobile terminal, if the said incomfort reference parameter exceeds the said task dependent parameter.

In this manner, the user comfort is not sacrificed for giving user input in a much faster and comfortable way or for improving the sound- or image quality significantly, if this would require an effort from the user, the incomfort due to the effort actually exceeding the more comfort.

The invention can help to utilise the better resource of other moile terminal or stationary information technology infrastrucure, whre the mobile terminal is not used in a mobility use-case. An employee could bring his mobile terminal to work where he works on a workstation equipped with a large screen, a microphone, and a loudspeaker. Someone calls up the employee on his mobile terminal - but instead of communicating using the mobile terminal, he uses the microphone and loudspeaker of his workstation. If the employee would like to write a short message, he could use the keyboard of the workstation to enter the text to be sent by the mobile terminal later.

If another employee, carrying his mobile terminal, would pass by, when his mobile terminal were to receive a call, no communication via the stationary input or output resource - ie the workstation - would take place because this another employee has not been authorized by the owner of the workstation.

Now suppose that the first employee were to visit the office of a third employee. When the first employee would receive an urgent incoming e-mail with lots of graphics attached, he could decide to view the email on the third employee's workstation. The mobile terminal would scan the environment about available stationary input or output resources - equipment or services - which would offer better quality and performance. Considering stored user priorities and behaviour, the mobile terminal would recommend to view email on the third employee's workstation. The first employee and the third employee mutually agree on a temporally restricted task sharing and the email is depicted on the screen of the workstation. For this purposes, the attachments in the email are just links so the real content, ie the pictures - are downloaded via the wired Internet link.

## Short description of the drawings

In the following, the invention will be described in more detail with reference to the examples in accompanying drawings, of which:

Figure 1 shows a mobile terminal capable of being in communication with a cellular network and a stationary input or output resource;

Figure 2 shows some examples how an event can be generated;

Figure 3 flow diagram showing actions following detecting an event;

Figure 4 shows performing the task after the matching step;

Figure 5 shows how data is retrieved from the cellular network between the matching step and performing the task;

Figure 6 illustrates a possibility for the matching step;

Figure 7 illustrates in more detail the step of producing matching result; and

Figures 8A and 8B show examples for defining the task-dependent parameter describing incomfort readiness of the user, and the incomfort reference parameter.

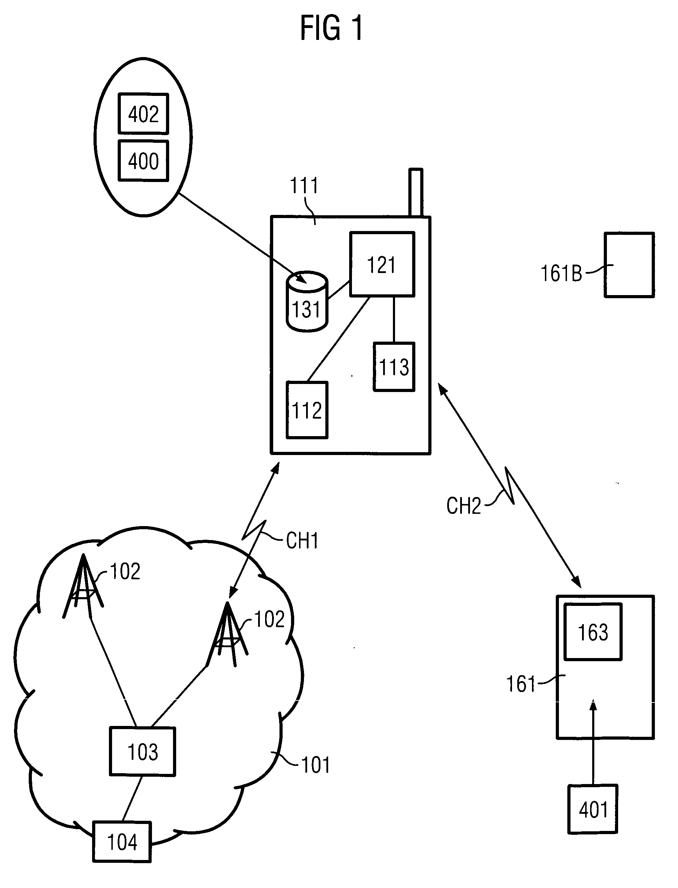

Same reference numerals refer to same structural elements throughout Figures 1 to 8B.

## Detailed description of the invention

Figure 1 shows a mobile terminal 111 which can with its first channel CH1 communication means 112 be in communication with a cellular network 101, such as a mobile telecommunications network. Characterizing for a cellular network 101 is that the mobile terminal 111 is in communication with a network element 103, such as a switching centre, within the cellular network 101 via base stations 102 through wireless connection on a first communication channel CH1. Particular examples of a cellular network include GSM, GPRS, EDGE, and UMTS networks, especially wherein said wireless connection in the first communication channel CH1 is carried out using microwave communications. ,'

The network element 103 may further be connected to another network element 104, such as a gateway element or an application server.

The mobile terminal 111 further comprises a central unit 121 which controls the first channel CH1 communication means 112. Further there is a memory 131 for storing task-related data, such as data describing events 400.

According to an aspect of the invention, the mobile terminal 111 further comprises second channel CH2 communication means 113. Preferably said second channel CH2 communication means 113 are controllable by the central unit 121.

A stationary input or output resource 161 comprises second channel CH2 communication means 163. The stationary input or output resource 161 is external to the mobile terminal 111. Examples of stationary input or output resources 161 comprise display means (TV, LCD screen, beamer), other visual output means (ink or laser printer, preferably colour and suitable for printing photos), and audio output means (loudspeakers, stereo or surround amplifier), input means (keyboard, joystick, light pen, microphone or any other transducer).

The stationary input or output resource 161 may further be remote controllable through a remote control 161B. In an example wherein the stationary input or output resource 161 is a television, the remote control 161B may control the stationary input or output resource 161 via infrared communications. Other communication means, especially such as Bluetooth or wireless LAN, are possible as well.

For a stationary input or output resource 161 there is associated a resource profile 401. The resource profile 401 may be stored in the stationary input or output resource 161, in the remote control 161B, or in the memory 131. The resource profile 402 may comprise an input or output capability related to the stationary input or output resource 161.

Preferably, in the memory 131 there is stored at least one task profile 401 comprising a list of preferable input or output capabilities. Based on an event 400 relating to a task to be performed on the mobile terminal 111, the central unit 121 is adapted to select a task profile 402 for the task. The central unit 121 receives further a resource profile 401. The task profile 402 is then matched in the central unit 121 with the resource profile 401, producing a matching result. If the matching result shows that the resource profile 401 correlates with the task profile 402, the task is performed using the available stationary input or output resource 161.

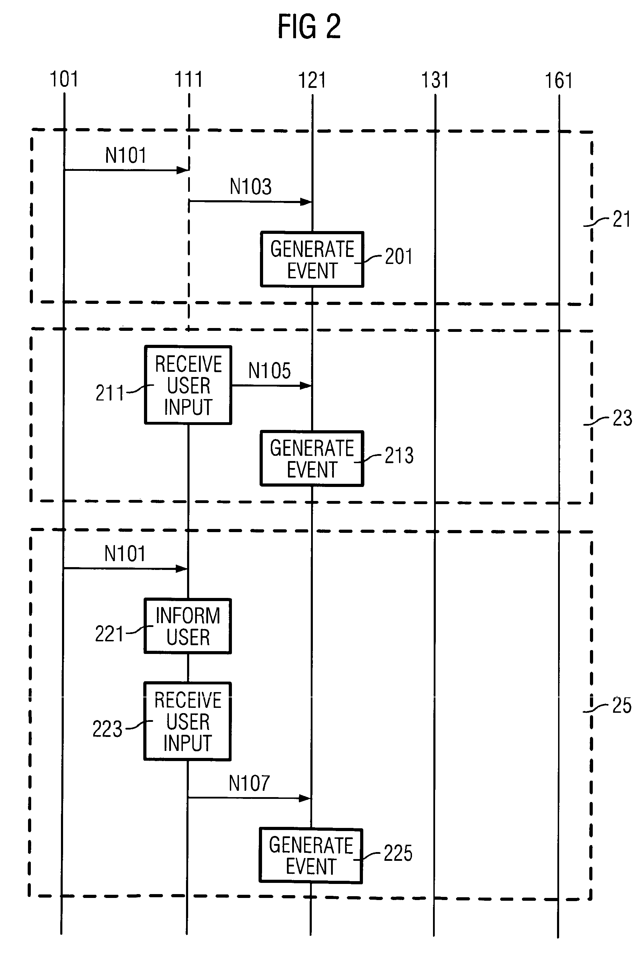

Figure 2 shows some examples how an event 400 can be generated. In dashed box 21 of Figure 2, message N101 arrives at the mobile terminal 111 from the cellular network 101. The mobile terminal 101 forwards a part of the message N101 as message N103 to the central unit 121. An example of the message N101 is a short message SMS or a multimedia message MMS. A corresponding example of message N103 could be a notification received at the central unit 121. In response to receiving the message N103, an event 400 is generated in step 201.

In dashed box 23, responsive a message N105 following of receiving user input in step 211, an event is generated in step 213. For example, receiving of user input in step 211 can correspond the user confirming that he or she would like to play an audio or video file, show an image, or start an application in the mobile terminal 111.

In dashed box 25 a message N101 is received at the mobile terminal 111 from the cellular network 101. In step 221 the user is informed, and responsive to a message N107 following the receiving of user input in step 223, an event is generated in step 225.

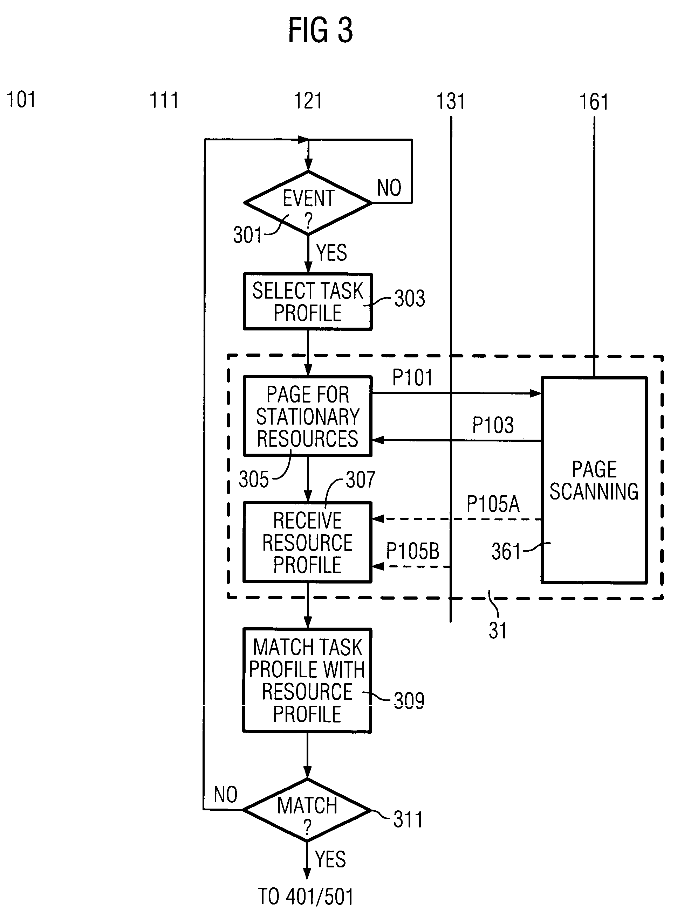

Figure 3 shows an exemplary flow diagram showing actions following the detection of an event. First, when an event 400 relating to a task to be performed is detected in step 301, a task profile 402 corresponding the event 400 is selected in step 303.

In dashed box 31, available stationary local input or output resources 161 external to the mobile terminal 111 are searched, and a set of stationary local input or output resources 161 available is produced. Further, a resource profile 401 of an available stationary input or output resource 161 belonging to the set of available resources is received. As already noted, the resource profile 401 can be received from where it is stored.

An example utilizing Bluetooth communication means as the second channel CH2 communication means 113 is further shown in Figure 3. In step 305, stationary input or output resources 161 are paged by the mobile terminal 111. In practice, the central unit 111 sends then a command to the second channel CH2 communication means 113 to broadcast a page signal P101.

In step 361 a stationary input or output resources 161 detects the page signal P101 and responds with a paging response P103. In step 305, the central unit 121 produces the set of stationary input or output resources 161 that are available, in response to receiving the paging response P103.

In step 307 a resource profile 401 is received at the central unit 121. As already noted, the resource profile 401 may be received from the stationary input or output resource 161 in question, either in a separate resource profile message P105A, or in the paging response P103. The resource profile 401 may also be received from the memory 131, or from the remote control 161B.

In step 309 the task profile 402 is matched with resource profile 401.

In step 311 it is checked, whether the task profile 402 matches with the resource profile 401. If there is no match, it is returned to step 301. In the opposite case, the control is passed to step 401 or 501 depending on the implementation.

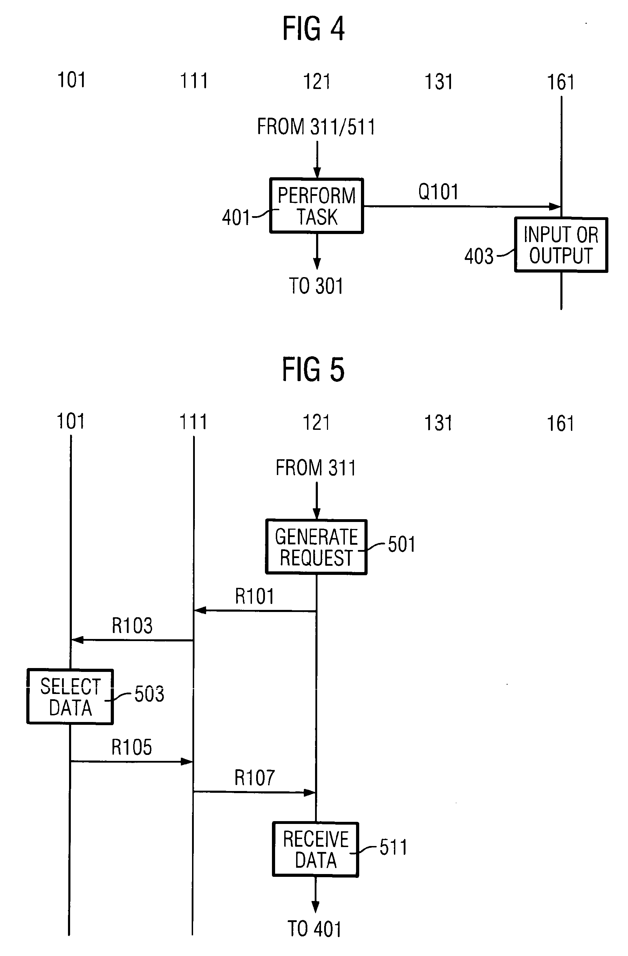

Figure 4 shows a simple example where the task is performed shortly after step 311. The central unit 121 commands the second channel CH2 communication means 113 to send a message Q101 to the stationary input or output resource 161. In step 401, the mobile terminal performs the tasks, wherein the stationary input or output resource 161 is used in performing the task.

Figure 5 shows a more complex case, where after step 311 a request R101 is generated in step 501 in the central unit 121. The central unit the request R101 to the mobile terminal 111 which further sends it using the first channel CH1 communication means 112 to the cellular network 101 as request R103. In response to receiving request R103, in step 503 data is selected, and data selected is transmitted to mobile terminal 111 in message R105. The mobile terminal 111 forwards the message R105 to the central unit 121 as message R107. The central unit 121 receives data of message R107 in step 511. Control is then further passed to step 401.

An advantage of the procedure shown in Figure 5 is that data to be retrieved can be selected depending on the stationary input or output resource 161 available. In other words, requests R101 and R103 may include data comprising information from the matching step 309. As an example, if for a MMS (which could arrive in message N101) a small image file is automatically sent, a larger image file can be retrieved in messages R105 and R107 if a stationary output resource 161 is available and if it would provide better image quality. A similar logic applies for audio files, for example.

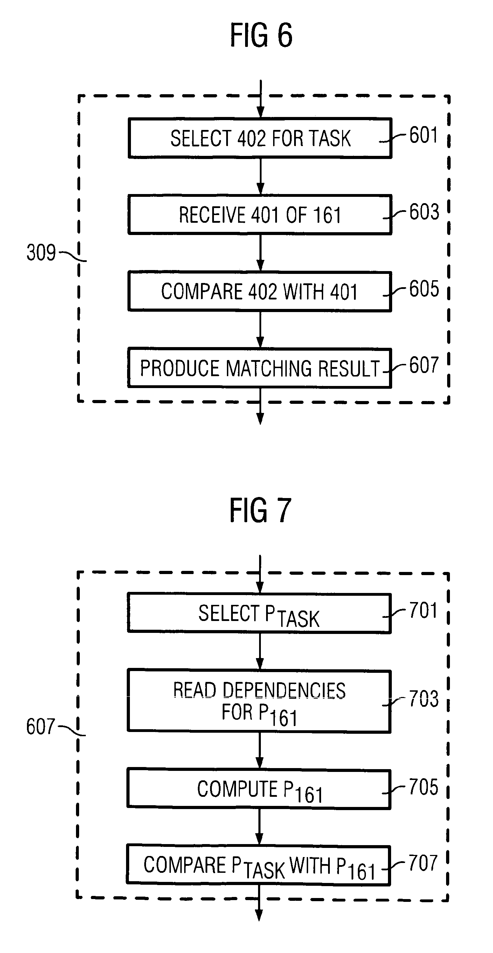

Figure 6 illustrates a possibility for the matching step 309. First, in step 601, a task profile 402 for the task corresponding the event 400 is selected. In step 603 the resource profile 401 of the stationary resource 161 is received. In step 605 the task profile 402 is compared with resource profile 401. In practice, this comparison may involve comparing some fields from each profiles with each other. Responsive to step 605, in step 607 a matching result is produced.

Figure 7 illustrates in more detail an example for step 607, wherein the matching result is produced. In step 701 a task dependent parameter $P_{TASK}$ describing incomfort readiness of the user. This parameter may be included in the task profile 402.

In step 703, responsive to receiving the resource profile 402, dependencies for calculating an incomfort reference parameter $p_{161}$ are read. In step 705 the incomfort reference parameter $p_{161}$ for said stationary input or output resource 161 is computed.

In step 707 the said incomfort reference parameter $p_{161}$ is compared with the said task dependent parameter $p_{TASK}$. If the said incomfort reference parameter $p_{161}$ exceeds the said task dependent parameter $P_{TASK}$, the comparison result could be "NO", being the matching result. In this case, the stationary input or output resource 161 is not used for performing the task. In the opposite case, the comparison result could be "YES", having the consequence that said stationary input or output resource 161 used for an output or input purpose for performing the task.

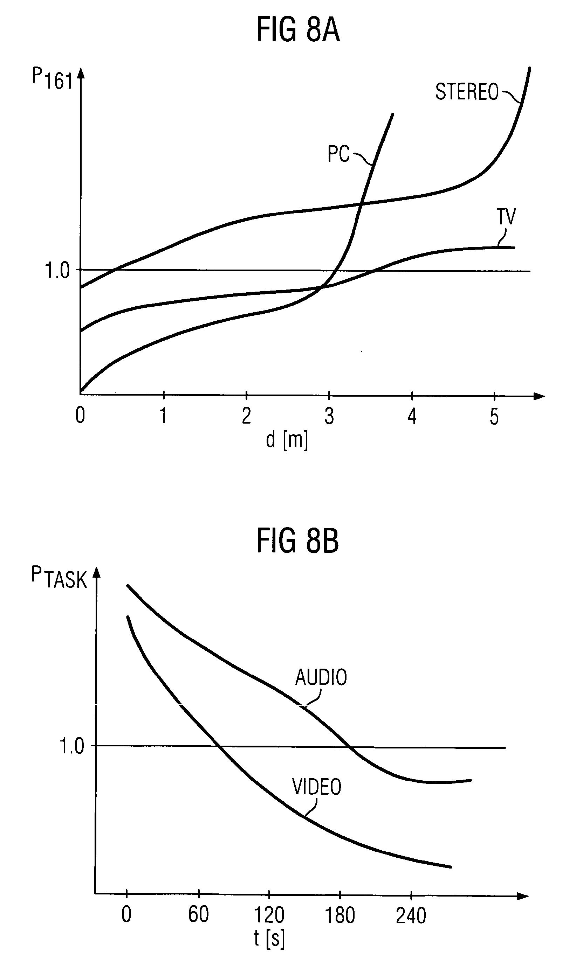

Figures 8A and 8B shows examples illustrating the relationship between the task dependent parameter $p_{TASK}$ describing incomfort readiness of the user, and the incomfort reference parameter $P_{161}$ for the stationary input or output resource 161.

In Figure 8A the value of the incomfort reference parameter $p_{161}$ for different stationary input or output resources 161 positively depends on the distance between the user or the mobile terminal 111 and each stationary input or output resource 161 or remote control 161B.

The value of the incomfort reference parameter $p_{161}$ may further positively depend on the need for changing a power mode of the stationary input or output resource 161. A functional form corresponding to the example of Figure 8A can then be written:

$$p_{161} = f_{161} \text{ (d, power mode of 161)},$$

where the user may preferably him- or herself define the actual form of the dependency. Further possible dependencies of the incomfort reference parameter $p_{161}$ can include a room identifier describing a room wherein the user or the mobile terminal 111 is located; or wherein the stationary resource 161 is located; an entry previously stored into personal preferences of the user; an access rights paramter value, or availability of alternative stationary resources 161.

In Figure 8B the task dependent parameter $p_{TASK}$ describing incomfort readiness of the user is shown as a function of estimated playing time t for presenting audio or video.

The task dependent parameter $p_{TASK}$ can negatively depend as an estimate of the duration of performing the task or using the stationary input or output resource. If the task would relate to presenting streaming audio or video, such as digital radio, television, or Digital Video Broadcasting DVB, then instead of time, available bandwidth BW between the mobile terminal 111 and the cellular network 101 could be used in defining dependencies for the task dependent parameter $p_{TASK}$. And for presenting an image, the the task dependent parameter $P_{TASK}$ could positively depend on the image size SZ in kilobytes. In other words, the functional form in the example of Figure 8B can be written:

$$P_{TASK} = g_{TASK} \text{ ( t, BW, SZ)}.$$

A further advantageous embodiment of the invention is that in performing the task, the stationary input or output resources 161 is used in combination with input or output means of another mobile terminal 111B. Especially, an external display such as a PC screen or television can be used to display information relating to a task being performed on the mobile terminal 111. At the same time, the keyboard of another mobile terminal 111B can be used to enter data to the mobile terminal 111. Instead of another mobile terminal 111B, a Personal Digital Assistant can be used as well.

According to a still further advantageous embodiment of the invention, the matching step 309 need not to be performed in the mobile terminal 111, but it may be performed on a network server or in the stationary input or output resource 161. The skilled person appreciates that signalling and access right control to the mobile terminal 111 is then modified accordingly, but this is immaterial for understanding the invention.

According to a still further advantageous embodiment of the invention, in the matching step 309 the stationary input or output resources 161 best suitable for performing the task is selected. In performing the selection, the user, service, resource, or task profiles, or any combinations thereof can be used.

**Claims**

1. A method for performing a task on a mobile terminal (111), **comprising the steps of:**

   - in response to detecting an event (400) relating to a task to be performed on the mobile terminal (111), selecting a task profile (402) for the task;
   - searching for available stationary local input or output resources (161) external to the mobile terminal (111), and producing a set of stationary local input or output resources (161) available;
   - receiving a resource profile (401) of an available stationary input or output resource (161) belonging to the set of available resources;
   - matching the task profile (402) with the resource profile (401) thus producing a matching result; and
   - if the matching result shows that the resource profile (401) correlates with the task profile (402), performing the task using the available stationary input or output resource (161).

2. A method of claim 1, **wherein:**

   - the resource profile (402) comprises an input or output capability related to the stationary input or output resource (161);
   - the task profile (401) comprises a list of preferable input or output capabilities; and
   - in the matching step (309), the input or output capability in the resource profile (402) is compared with an entry on the list of preferred input or output capabilities (401).

3. A method of claim 1 or 2, **wherein:**

   - the said task profile (401) further comprises a task dependent parameter ($p_{TASK}$) describing incomfort readiness of the user;
- responsive to receiving the resource profile (402), calculating an incomfort reference parameter ($p_{161}$) for said stationary input or output resource (161); and
- in matching the task profile (401) with the resource profile (402), the said incomfort reference parameter ($p_{161}$) is compared with the said task dependent parameter ($P_{TASK}$); and the said stationary input or output resource (161) is not selected if the said incomfort reference parameter ($p_{161}$) exceeds the said task dependent parameter ($p_{TASK}$).

4. A method of claim 3, **wherein:** said incomfort reference parameter ($p_{161}$) positively depends on:

   - distance between the user or the mobile terminal (111) and the stationary input or output resource (161); or
   - distance between the user or the mobile terminal (111) and remote control means (161B) of the stationary input or output resource (161); or
   - need for changing a power mode of the stationary input or output resource (161).

5. A method of claim 3 or 4, **wherein:** said task dependent parameter ($p_{TASK}$) negatively depends on:

   - an estimate of the duration of performing the task or using the stationary input or output resource (161); or
   - physical size of stationary input or output resource (161); or
   - size of a file comprising image, audio, or text data, associated with an input or output part of the task; or
   - increasing bandwidth if the task relats to presenting streaming audio or video.

6. A method of claim 3, 4, or 5, wherein: said incomfort reference parameter ($p_{161}$) further depends on:

   - a room identifier describing a room wherein the user or the mobile terminal (111) is located; or wherein the stationary resource (161) is located;
   - an entry previously stored into personal preferences of the user;
   - an access rights parameter value; or
   - availability of alternative stationary resources (161).

7. A mobile terminal (111) adapted to perform a task, **comprising:**

   - means (121) for selecting a task profile (402) in response to receiving an identifier of an event (400) relating to a task to be performed on the mobile terminal (111);
- means (113) for searching for available stationary local input or output resources (161) external to the mobile terminal (111), and means (121) for producing a set of stationary local input or output resources (161) available;
- means (121) for receiving a resource profile (401) of an available stationary input or output resource (161) belonging to the set of stationary local input or output resources (161) available;
- means (121) for matching the task profile (402) with the resource profile (401), adapted to produce a matching result; and
- means for performing the task using the available stationary local input or output resource (161), if the matching result shows that the resource profile correlates with the task profile (402).

8. A mobile terminal (111) of claim 7, **wherein:**

   - the resource profile (401) comprises an input or output capability related to the stationary input or output resource (161);
   - the task profile (402) comprises a list of preferable input or output capabilities; and
   - in the matching means (121), the input or output capability in the resource profile (402) is compared with an entry on the list of preferred input or output capabilities.

9. A mobile terminal (111) of claim 7 or 8, **wherein**:

   - the said task profile (402) further comprises a task dependent parameter ($p_{TASK}$) describing incomfort readiness of the user;
   - responsive to receiving the resource profile (401), calculating an incomfort reference parameter ($p_{161}$) for said stationary input or output resource (161); and
   - in matching the task profile (402) with the resource profile (401), the said incomfort reference parameter ($p_{161}$) is compared with the said task dependent parameter ($p_{TASK}$); and the said stationary input or output resource (161) is not selected if the said incomfort reference parameter ($P_{161}$) exceeds the said task dependent parameter ($p_{TASK}$).

10. A mobile terminal (111) of claim 9, **wherein:** said incomfort reference parameter ($P_{161}$) positively depends on:

    - distance between the user or the mobile terminal (111) and the stationary input or output resource (161); or
- distance between the user or the mobile terminal (111) and remote control means (161B) of the stationary input or output resource (161); or
- need for changing a power mode of the stationary input or output resource (161).

11. A mobile terminal (111) of claim 9 or 10, **wherein:** said task dependent parameter ($p_{TASK}$) negatively depends on:

- an estimate of the duration of performing the task or using the stationary input or output resource (161); or
- physical size of stationary input or output resource (161); or
- size of the input comprising image, audio, or text data, associated with an input or output part of the task.

12. A mobile terminal (111) of claim 9, 10, or 11, wherein: said incomfort reference parameter ($p_{161}$) further depends on on:

- a room identifier describing a room wherein the user or the mobile terminal (111) is located; or wherein the stationary resource (161) is located;
- an entry previously stored into personal preferences of the user;
- an access rights parameter value; or
- availability of alternative stationary resources (161).

# FIG 1

# FIG 2

# FIG 3

101      111      121      131      161

EVENT ? — NO

301 — YES

SELECT TASK PROFILE — 303

PAGE FOR STATIONARY RESOURCES — 305

P101 →

P103 ←

RECEIVE RESOURCE PROFILE — 307

P105A

P105B

PAGE SCANNING

361

31

MATCH TASK PROFILE WITH RESOURCE PROFILE — 309

NO — MATCH ? — 311

YES

TO 401/501

# FIG 4

101      111      121      131      161

FROM 311/511

401 — PERFORM TASK     Q101 →

403 — INPUT OR OUTPUT

TO 301

# FIG 5

101      111      121      131      161

FROM 311

GENERATE REQUEST — 501

R101

R103

SELECT DATA — 503

R105

R107

RECEIVE DATA — 511

TO 401

# FIG 6

SELECT 402 FOR TASK — 601

RECEIVE 401 OF 161 — 603

309

COMPARE 402 WITH 401 — 605

PRODUCE MATCHING RESULT — 607

# FIG 7

SELECT $P_{TASK}$ — 701

READ DEPENDENCIES FOR $P_{161}$ — 703

607

COMPUTE $P_{161}$ — 705

COMPARE $P_{TASK}$ WITH $P_{161}$ — 707

# FIG 8A

# FIG 8B

EP 1 544 734 A1

## European Patent Office

## EUROPEAN SEARCH REPORT

Application Number

EP 03 02 8970

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 1 180 903 A (NOKIA CORP) 20 February 2002 (2002-02-20) * column 2, line 28 - column 4, line 2 * * column 6, line 24 - column 7, line 20 * * column 7, line 55 - column 8, line 23 * * column 8, line 57 - column 10, line 14 * ----- | 1-12 | G06F9/46 |
| Y | US 6 088 732 A (GRACE ANDREW P ET AL) 11 July 2000 (2000-07-11) * column 5, line 41 - column 10, line 45 * * table 1 * * table 2 * ----- | 1-12 | |
| A | EP 1 189 403 A (ERICSSON TELEFON AB L M) 20 March 2002 (2002-03-20) * paragraph [0011] - paragraph [0015] * * paragraph [0023] - paragraph [0044] * ----- | 1-12 | |
| A | US 6 141 705 A (SRINAVAS NK ET AL) 31 October 2000 (2000-10-31) * column 2, line 66 - column 4, line 52 * * column 13, line 44 - column 14, line 4 * ----- | 1-12 | TECHNICAL FIELDS SEARCHED (Int.Cl.7) |
| A | FARJAMI P ET AL: "Advanced service provisioning based on mobile agents" COMPUTER COMMUNICATIONS, ELSEVIER SCIENCE PUBLISHERS BV, AMSTERDAM, NL, vol. 23, no. 8, April 2000 (2000-04), pages 754-760, XP004192595 ISSN: 0140-3664 * the whole document * ----- | 1-12 | G06F |

The present search report has been drawn up for all claims

| Place of search | Date of completion of the search | Examiner |
|---|---|---|
| The Hague | 21 June 2004 | Kusnierczak, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

**ANNEX TO THE EUROPEAN SEARCH REPORT
ON EUROPEAN PATENT APPLICATION NO.**                    EP 03 02 8970

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2004

| Patent document cited in search report | | Publication date | Patent family member(s) | | Publication date |
|---|---|---|---|---|---|
| EP 1180903 | A | 20-02-2002 | EP | 1180903 A1 | 20-02-2002 |
| US 6088732 | A | 11-07-2000 | AU | 732658 B2 | 26-04-2001 |
| | | | AU | 6411198 A | 12-10-1998 |
| | | | CA | 2283893 A1 | 24-09-1998 |
| | | | DE | 69816599 D1 | 28-08-2003 |
| | | | DE | 69816599 T2 | 13-05-2004 |
| | | | EP | 0966814 A1 | 29-12-1999 |
| | | | WO | 9842101 A2 | 24-09-1998 |
| EP 1189403 | A | 20-03-2002 | EP | 1189403 A1 | 20-03-2002 |
| | | | AU | 2163601 A | 26-03-2002 |
| | | | WO | 0223859 A1 | 21-03-2002 |
| US 6141705 | A | 31-10-2000 | EP | 1086421 A1 | 28-03-2001 |
| | | | JP | 2002517855 T | 18-06-2002 |
| | | | WO | 9964952 A1 | 16-12-1999 |
| | | | US | 6370599 B1 | 09-04-2002 |

EPO FORM P0459

For more details about this annex : see Official Journal of the European Patent Office, No. 12/82